(19) Europäisches Patentamt
European Patent Office
Office européen des brevets

(11) Publication number: 0 211 527 A2

(12) EUROPEAN PATENT APPLICATION

(21) Application number: 86305305.4

(51) Int.Cl.⁴: C 02 F 1/28

(22) Date of filing: 10.07.86

(30) Priority: 01.08.85 US 761640
01.08.85 US 761641

(43) Date of publication of application: 25.02.87 Bulletin 87/9

(84) Designated Contracting States: BE DE FR GB IT NL

(71) Applicant: BETZ EUROPE, INC.
4636 Somerton Road
Trevose Pennsylvania 19047(US)

(72) Inventor: Walterick, Gerard C., Jr.
24 Farmbrook drive
Levittown Pennsylvania 19055(US)

(72) Inventor: Fillipo, Bruce K.
115 Village Green Lane
Dublin Pennsylvania 18917(US)

(74) Representative: Gore, Peter Manson et al,
W.P. THOMPSON & CO. Coopers Building Church Street
Liverpool L1 3AB(GB)

(54) **Compositions comprising powered activated carbon and their use.**

(57) A method for reducing the content of trihalomethane compounds or precursors thereof in influent water, which comprises adding to the water

a) powdered activated carbon,

b) a water soluble or water dispersible cationic polymer.

A method of treating influent water to reduce the content of trihalomethane compounds or precursors thereof, wherein the water is caused to travel from an upstream direction to a downstream direction and is subjected to softening, clarification or filtration processes, which comprises adding to the water, at a location or locations upstream from the softening, clarification or filtration processes,

a) powdered activated carbon,

b) a water dispersible cationic polymer.

A composition comprising a slurry of powdered activated carbon and an effective amount of an effective suspending agent.

EP 0 211 527 A2

Croydon Printing Company Ltd.

# DESCRIPTION

## COMPOSITIONS COMPRISING POWDERED ACTIVATED CARBON AND THEIR USE.

The present invention relates to compositions comprising powdered activated carbon and their use. More particularly it relates to methods for reducing the content of trihalomethane compounds and precursors thereof in influent water for potable and/or industrial use. It also relates to slurry compositions comprising the powdered activated carbon.

Chlorine is commonly used in water treatment processes for a variety of reasons. It is a known disinfectant, may be used to remove ammonia and other nitrogenous organic compounds, and can also provide control over objectionable taste and odour. Chlorine addition also serves to reduce colour, and to control slime and algae growth.

Chlorine can be provided in gaseous form or in liquid form. Commonly utilized compounds include hypochlorites of calcium and sodium, chloramines produced via reaction of chlorine and ammonia, chlorine dioxide, and chlorine donor complexes such as chlorinated cyanurates.

Recent concern has arisen over the formation of trihalomethane (THM) species in potable and industrial waters due to the alleged carcinogenicity of these materials. Conventional wisdom attributes such THM formation to chlorination.

In addition to chloroform formation, other troublesome THM species, depending on initial water chemistry and treatment parameters, may include bromodichloromethane, dibromochloromethane, bromoform, iododichloromethane, diiodochloromethane and iodoform. These species are thought to form when THM precursor compounds such as ethanol, methyl ketone, humic acid, acetone, acetaldehyde, or acetophenone, are contacted with chlorine or other halogen.

Accordingly, the desirability of attaining effective methods to reduce the formation of THMs or precursor compounds is readily apparent.

The use of powdered activated carbon (P.A.C.) as a filter medium in water clarification and coagulation applications is well known. For instance, in U.S. Patent 3,252,899 (Rice et al) powdered activated carbon is added to the water to be clarified and is passed through a separation bed. The activated carbon particles are retained in the separation bed and provide an increased surface area upon which organic materials may be adsorbed.

In "Measurement of Trihalomethane and Precursor Concentration Changes", Stevens et al, Journal AWWA, page 546-54; October, 1977, it is stated that THM and precursor removal efficiencies vary widely with time in service of granular activated carbon filters.

More particularly there is shown therein the use of activated carbon and a polymeric flocculating agent such as polyacrylamide or hydrolyzed polyacrylamide is stated to remove organic pollutants from wastewater. Of similar import is U.S. Patent 4,043,904 (Takeda, et. al) which teaches the use of polyacrylamide with P.A.C. to cleanse wastewaters contaminated with polynuclear surface active agents.

Other descriptions of uses of powdered activated carbon include U.S. Patent 4,043,904 (Takeda et al); U.S. Patent 4,239,865 (Tarao et al); U.S Patent 4,320,011 (Sato et al); Chem Abstract 87:90304e (1977); Chem Abstract 89:117244m (1978); Chem Abstract 94:157877e (1981); and Chem Abstract 89:117260p (1978).

Although the use of powdered activated carbon is well known in the art, numerous problems have arisen when the product has been shipped in dry, particulate form. Dusting problems can occur at usage locations

due to the propensity of the P.A.C. to rapidly form airborne particulates. As such, potential health concerns are raised.

Additionally, in those situations in which the end-user must prepare a P.A.C. containing slurry prior to its use, a large holding vessel is needed in order to prepare the slurry.

Accordingly, there is a need in the art to provide a P.A.C. containing slurry product which can be shipped and even stored for reasonable time periods without substantial gellation or phase separation. Of especial importance is the need for such a slurry product which can easily be handled and directly pumped from its container to the desired end-use location.

Cationic polyelectrolyte in combination with sand filters and/or anthracite coal/sand filters for colour and chloroform precursor removal in low turbidity water is disclosed in "Removing Color and Chloroform Precursors from Low Turbidity Waters by Direct Filtration", Scheuch et al, Journal AWWA, pages 497 to 502, September, 1981. One specific polyquaternary ammonium polymer formed via condensation reaction of dimethylamine and epichlorohydrin is disclosed in the article and is the same as the preferred polymer of Group I as specified hereinbelow.

Other documents which may be of interest to the present application include: U.S. Patent 4,239,865 (Tarao, et. al.); U.S. Patent 4,320,011 (Sato, et.al.); Chem. Abstract 87:90304e (1977); Chem. Abstract 89:117244m (1978); Chem. Abstract 94:157877e (1981); and Chem. Abstract 89:117260p (1978).

Despite the efforts of the prior art, there remains a need for an economical THM or precursor reduction treatment method.

By means of the present invention it has been found that conjoint use of powdered activated carbon (P.A.C.) and a cationic water soluble or dispersible polymer or polymers effectively reduces THM or precursor thereof concentration, providing significantly enhanced results over the use of either of the components singly. In one particular aspect of the present invention, the powdered activated carbon is added to the desired system in slurry form with an effective polysaccharide suspending agent, such as, for instance, a hydroxyethyl cellulose or carboxymethyl cellulose material.

According to one embodiment of the present invention there is provided a method for reducing the content of trihalomethane compounds or precursors thereof in influent water, which comprises adding to the water

a) powdered activated carbon,

b) a water soluble or water dispersible cationic polymer.

According to another embodiment of the present invention, there is provided a method of treating influent water to reduce the content of trihalomethane compounds or precursors thereof, wherein the water is caused to travel from an upstream direction to a downstream direction and is subjected to softening, clarification or filtration processes, which comprises adding to the water, at a location or locations upstream from the softening, clarification or filtration processes,

a) powdered activated carbon,

b) a water dispersible cationic polymer.

Thus treatment comprising P.A.C. and a water soluble or water dispersible cationic polyelectrolyte is utilized to reduce the THM or precursor thereof

content of influent water. These components are preferably admitted to the influent, raw water at a location or locations upstream from a softening, clarification or filtration process.

The first component of the system is powdered activated carbon. This is available commercially from a variety of sources.

The second component is a water soluble or dispersible cationic polyelectrolyte polymer or polymers which may be chosen from the groupings (I), (II), (III) as hereinafter defined.

Polymers belonging to the first (I) grouping include water soluble or dispersible polyquaternary ammonium polymers of the type disclosed in U.S. Reissue Patent 28,807 (Panzer, et.al.).

As is stated in that reissue patent, the polyquaternary polymers of cationic polymer group (I) are derived from reaction of secondary amines, such as dialkylamines, and difunctional epoxide compounds or precursors thereof.

In accordance with the reissue patent disclosure, the water dispersible polyquaternary polymers, when used in the present invention, comprise repeating units

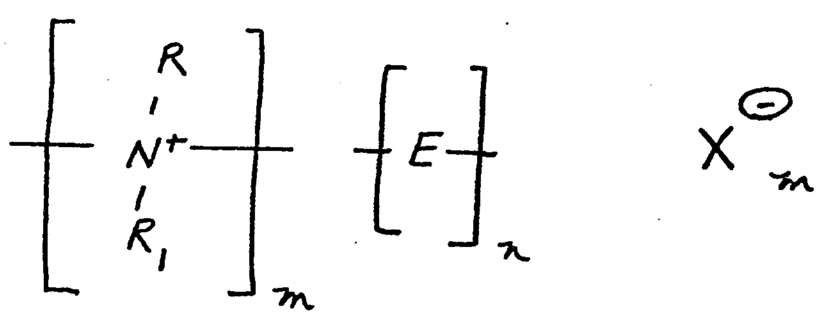

wherein R and $R_1$ are independently selected from lower alkyl (1 to 3 carbon atoms); E is the residue obtained after bifunctional reaction of a compound selected from epihalohydrins, diepoxides, precursors for epihalohydrins and diepoxides, and mixtures thereof; m and n are integers of substantially equal value; and $X^{\ominus}$ represents the anion forming a portion of the polyquaternary compound. In summary, the polymers (group I) involve only two reactants: a lower dialkylamine, and a difunctional epoxy type reactant.

As to the epoxy reactant, epihalohydrins such as epichlorohydrin and epibromohydrin may be mentioned. Epichlorohydrin is preferred. Diepoxides such as 1,4-dibutanediol-diglycidyl ethers are also useful. Precursors for epihalohydrins and diepoxides are also useful. Exemplary precursors include: 1,3-dichloropropanol-2 and 1,4-dichloro,2,3-dihydroxybutane.

As to the secondary amines which may be used as reactants, these include dimethylamine, diethylamine, dipropylamine, and secondary amines containing mixtures of alkyl groups having 1 to 3 carbon atoms.

Exact reaction parameters may be gleaned from perusal of aforementioned U.S. Re 28,807 and need not be repeated here. Suffice it here to say that the preferred polymer of group I is formed from dimethylamine and epichlorohydrin reaction. Such reaction is detailed in Example 1 of the reissue patent.

The preferred polyquaternary polymer of group I is thought to have the structure:

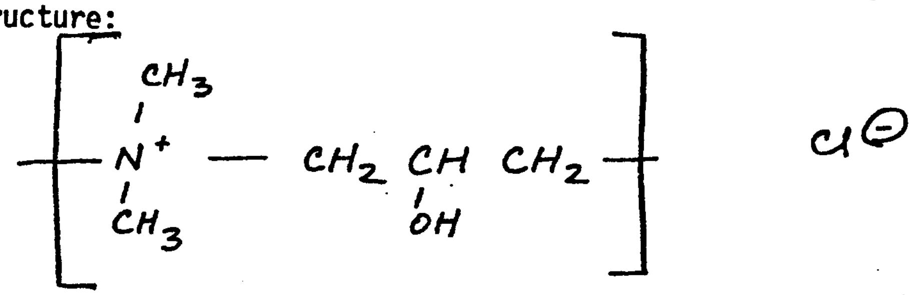

The molecular weight of this polymer is approximately 10,000. The particular molecular weight is not critical as long as the polymer remains water soluble or water dispersible.

As to the group (II) cationic polymers which may be used in accordance with the invention, these may be generically characterized as cross-linked polyquaternary ammonium polymers and are described in detail in U.S. Reissue Patent 28,808 (Panzer, et. al.).

As is stated in the 28,808 reissue patent, the water dispersible polyquaternary polymer comprise repeating units

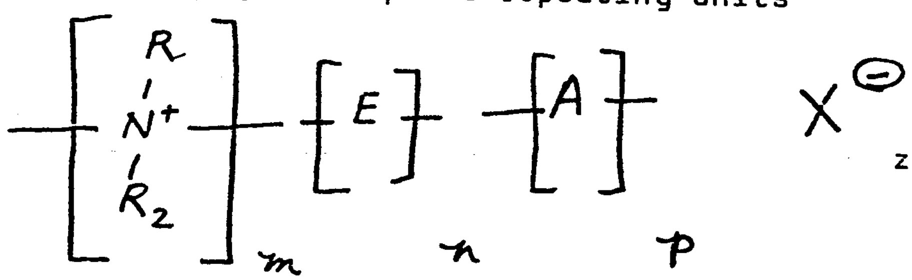

wherein R, $R_2$, E, m, and n are the same as given above for the polymer (I) grouping;

A is the residue obtained after bifunctional reaction of a polyfunctional polyamine selected from ammonia,

primary amines, alkylene diamines of 2 to 6 carbon atoms, polyalkylpolyamines of the structure

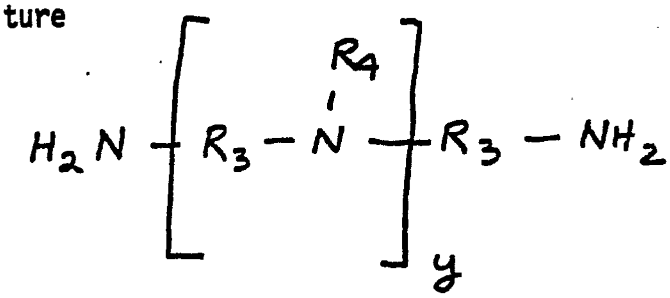

wherein y represents an integer of about 1 to 5, $R_3$ is an alkylene radical of about 2 to 6 carbon atoms, and $R_4$ is selected from hydrogen, alkyl of about 1 to 3 carbon atoms, and ω-aminoalkyls of about 2 to 6 carbon atoms, a polyglycolamine of a structure such as

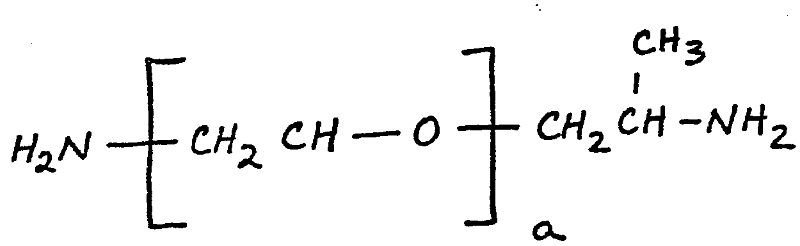

wherein a is an integer of about 1 to 5, piperazine heteroaromatic diamines of the structure

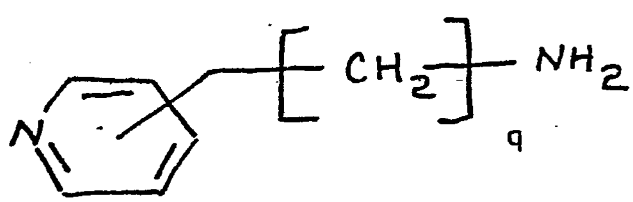

wherein q is zero or an integer of about 1 to 3, aromatic diamines of the structure

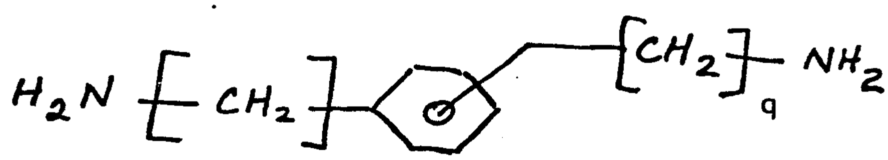

wherein q is zero or an integer of about 1 to 3, and polyamine-polybasic acid condensation products of molecular weight up to about 10,000; $X^-$ is an ion forming the anionic portion of said polyquaternary compound; m and p are integers which represent molar quantities of amine reactants, the ratio of m to p being from about 99:1 to 85:15; n represents the molar quantity of E forming the principal chain of said polyquaternary, the molar quantity represented by n being substantially equal to the sum of the molar quantities of m and p; said polyfunctional amine containing in addition to the amount of E required for difunctional reaction therewith an amount of E which is from zero to about the full functional equivalency remaining in said A; the sum of m, n and p being such as to provide a polyquaternary compound which as a 37% aqueous solution, by weight, based on the total weight of the cationic portion of said polyquaternary has a viscosity at 25°C of at least = 100 centistokes and z is an integer such as to satisfy anion requirements of the polyquaternary compound.

In summary, the group II polymers are formed from three reactants: a lower dialkylamine ($C_1$ to $C_3$), a difunctional epoxy type reactant (the same as in the Group I polymers) and a third reactant selected from ammonia, primary amines, alkylene-diamines of from 2 to 6 carbon atoms, and polyamines as defined hereinabove for A.

Exact reaction parameters for the group II cationic polyelectrolytes are specified in aforementioned U.S. Re 28,808 and need not be repeated here. The preferred group II polymer is a cross-linked polyquaternary polymer formed from ethylenediamine, dimethylamine and epichlorohydrin (see for instance Example 2 of U.S. Re 28,808).

The preferred group II polymer is thought to have the structure:

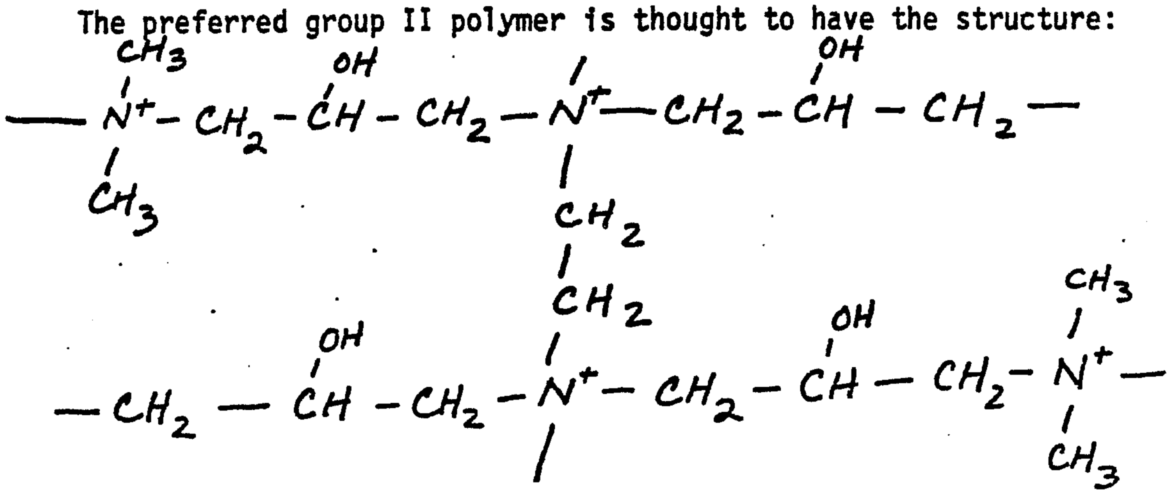

The molecular weight $\overline{M}n$ of this polymer is 400 to 600 x $10^3$.

Cationic polymers of Group III are disclosed in U.S. Patent 3,288,770 (Butler).

To paraphrase U.S. 3,288,770, these particular high molecular weight polyquaternary polymers are characterized as having a linear homopolymer chain of repeat units having one of the formulae:

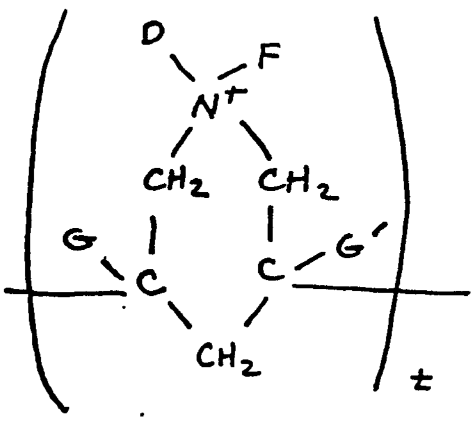

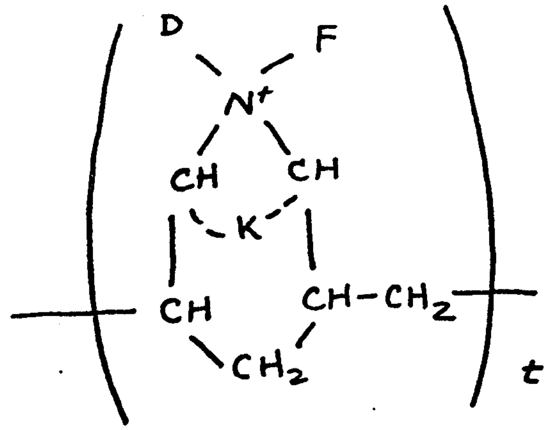

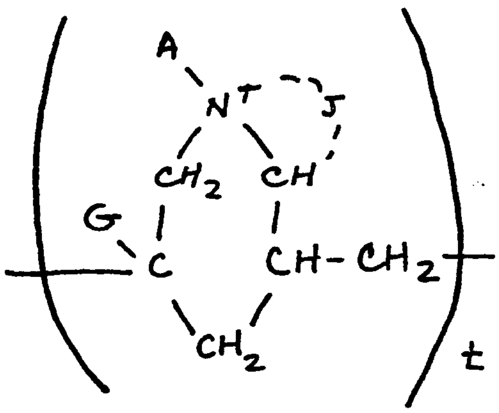

or

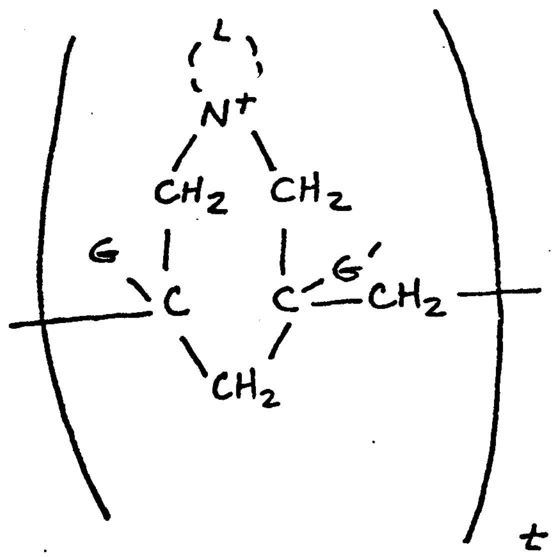

It will be appreciated that, with each such cationic ammonium group, there is associated a chloride anion.

In the above formulae, the symbols D and F independently represent an alkyl, hydroxyalkyl, or phenyl radical which may contain as substituents such groupings as amido, carboloweralkoxy, loweralkoxy, mono and dicyclic aryloxy, cyano, thioloweralkoxy, thiophenoxy, or lower alkoyl (forming a ketonic group) radicals, 5- and 6-membered cycloalkyl groupings, and, on the alkyl groupings only, a nitro group, and on the phenyl radical only, a halogen atom (chlorine, bromine, fluorine, and iodine).

The symbols G and G' independently represent a hydrogen, chloro, bromo, or lower alkyl or phenyl radical, having substituents as stated under the definition for D and F above.

The symbol K stands for a divalent radical of the formula:

$$-CH_2-(O)_s-(CH_2)_u$$

The symbol J stands for a divalent radical of the formula:

$$-(CH_2)_w-(O)_s-CH_2-$$

The symbol L stands for a divalent radical of the formula:

$$-(CH_2)_w-(O)_s-(CH_2)_2$$

In these last-mentioned formulae, the small letter s represents one of the numbers 0 and 1; the small letter u represents one of the numbers 1 and 2; and the small letter w represents one of the numbers 2 and 3.

After the issuance of U.S. 3,288,770, the following formula has been reported as being characteristic of the preferred polymer of group III, namely polydiallyldimethyl ammonium chloride (DADMAC):

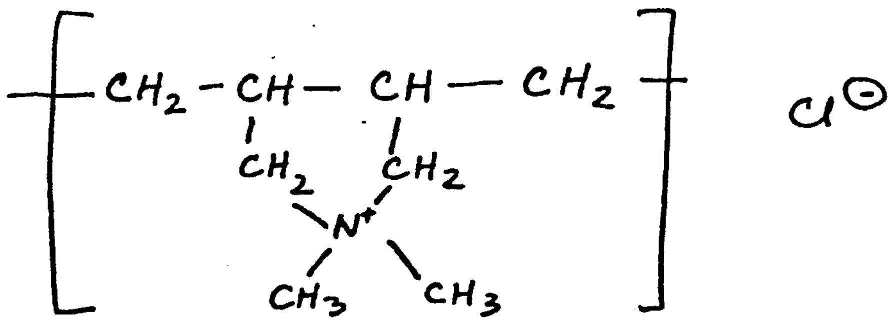

This preferred polymer of Group III has been reported to have a molecular weight ($\bar{M}n$) of between about 250 to 400 x $10^3$. It is noted that the molecular weight of this third component (as well as for the polymers of groups I and II) is not critical as long as the polymer remains water soluble or water dispersible.

Methods for producing the polymers of the Group III grouping need not be reported in detail herein, as they are reported in the aforementioned U.S. Patent 3,288,770. The preferred DADMAC polymer of Group III, for instance, may be prepared in accordance with the disclosure of Example 1 of said U.S. Patent 3,288,770.

Particularly useful is a water soluble or water dispersible cationic polymer which comprises both (i) a polyquaternary ammonium polymer formed via reaction of a secondary amine with epihalohydrin or epoxide and (ii) a polydiallyldimethyl ammonium chloride polymer.

The trihalomethane compounds may comprise, for example, a member or members selected from chloroform, bromodichloromethane, dibromochloromethane, bromoform, iodoform, iododichloromethane, and diiodochloromethane.

The precursors may comprise, for example, a member or members selected from ethanol, methyl ketone, humic acids, acetaldehyde, acetone, and aceptophenone.

The amounts of the treatment components to be fed to the system will vary in accordance with such factors such as: amount of THM or precursors present in the influent water, water pH, and temperature.

The following treatment ranges, given in terms of ppm (based upon one million parts water) are contemplated:

Component One - P.A.C. - 1 ppm to 5,000 ppm, with a range of 5 ppm to 200 ppm being preferred;

Component Two - a water soluble or dispersible cationic polyelectrolyte chosen from the above groupings (I) (II) or (III) - based upon 100% actives polymer - 0.1 to 2,500 ppm. It is noted that mixtures of polymers from the groupings (I) (II) and (III) are also within the purview of the invention. A range of from about 1 to 1,250 ppm of the cationic polymer is preferred.

It is presently preferred to admit the P.A.C. component to the desired influent water in the form of a slurry comprising an effective suspending agent. Presently, polysaccharide materials appear to optimize slurry stability and viscosity. Preferably the slurry is prepared so as to have an initial viscosity of about 2,500 to 4,000 mPa sec (cps) Brookfield RVT. The slurry should be capable of being stored at ambient temperature for about 6 months without substantial phase separation.

The preferred suspending agents are the cellulosic ethers, preferably a member or members selected from hydroxyalkyl ($C_1$ to $C_4$) cellulose ethers and carboxyalkyl ($C_1$ to $C_4$) cellulose ethers. Hydroxyethyl cellulose and carboxymethyl cellulose are most preferred. The slurry will comprise from about 1 to 50 wt. % P.A.C., about 0.025 to 5.00 wt. % cellulose ether and remainder water. The slurry should preferably have a viscosity of about 2,500 to 4,000 mPa sec (cps) Brookfield RVT.

At present, the P.A.C. containing slurry preferred for use comprises (based on the total slurry weight)

0.5% sodium carboxymethyl cellulose suspending agent (commercially available from Hercules, Inc.)

30.0% P.A.C.

Remainder in water

This preferred composition is capable of being stored at ambient temperature for about six months without substantial phase separation. After lengthy storage, the viscosity of the slurry may increase to within about 20,000 to 100,000 mPa sec (cps), but this viscosity is readily reduced by application of appropriate shear force.

Another polysaccharide which was tried as the suspending agent was dextran. This particular suspending agent exhibited some efficacy although the cellulosic ethers performed much better and are therefore preferred for use.

Quite surprisingly, other well known suspending agents such as polyvinylalcohol and certain polyelethylene glycol ester products did not function adequately to suspend the P.A.C. in the slurry. When these particular materials were used, unacceptable phase separation occurred within a few hours.

It has been found that optimal THM as precursor reduction is achieved whent the P.A.C. slurry and a combination of water soluble or dispersible cationic polymers is used. Specifically, the polymers which are presently preferred are:

<u>Group I Polymer</u> - polyquaternary ammonium polymer formed via condensation reaction of dimethylamine and epichlorohydrin thought to have structure

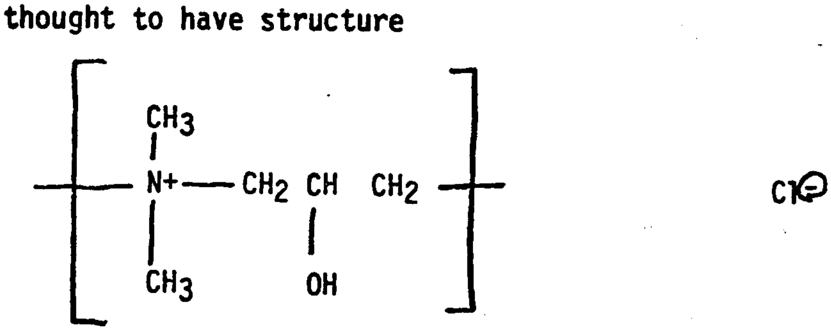

Molecular weight ≈ 10,000

Group III Polymer - polygiallydimethylammonium chloride (DADMAC) $\bar{M}n \simeq 250 - 400 \times 10^3$.

The presently preferred ppm addition range for P.A.C. and both of the preferred polymers is shown in the Table in the following Examples which illustrate, but in no manner limit, the present invention in respect of the treatment of influent water to reduce the control of THM or precursors thereof.

Examples

In order to demonstrate the efficacy of the invention in reducing trihalomethane (THM) content in influent water, THM reduction tests were conducted using Florida well water samples. The procedure used was a basic jar test in which the beakers were mixed simultaneously by a gang stirrer. The results appear in the following table.

Jar Test Procedure:

1. 500 mL of Florida well water added to each 400 mL beaker;

2. each filled beaker mixed at 100 rpm using a stirrer equipped with a 2.54 x 7.62 cm (1 x 3") paddle;

3. treatment added at indicated dosages; mixed 30 minutes at 100 rpm;

4. mixing speed reduced to 40 rpm, mixed 7 minutes at 40 rpm;

5. mixing stopped, samples allowed to settle for 10 minutes.

Procedure for Handling Samples for THM Analysis:

1. sample of each supernatant water treated with excess chlorine to promote formation of trihalomethanes;

2. sample bottles filled and sealed so that no air is entrapped;

3. supernatant water + chlorine allowed to react for 96 hours at ambient temperature;

4. each sample treated with sodium thiosulfate to stop reaction with chlorine;

5. samples refrigerated until analyzed;

6. samples analyzed by purge and trap gas chromatography method to determine THM content.

Table - Trihalomethane Removal

Treatment Dosages

| Treatment Added | PAC (ppm) | Polymer "A" (ppm) | Polymer "B" (ppm) | Supernatant THM (ppm $CHCl_3$) |
|---|---|---|---|---|
| None | - | - | - | 1.10 |
| PAC + Polymer "A" + Polymer "B" | 90 | 8.1 | 1.2 | 0.65 |
| PAC | 90 | - | - | 0.84 |
| Polymer "A" + Polymer"B" | - | 8.1 | 1.2 | 0.86 |

Polymer A =

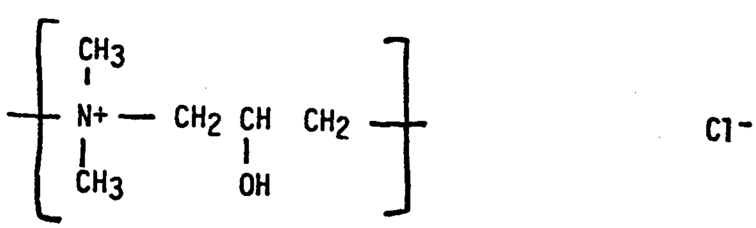

Molecular weight ≃ 10,000

Formed from dimethylamine and epichlorohydrin and condensation reaction, a Group I copolymer.

Polymer B = polydiallyldimethyl ammonium chloride

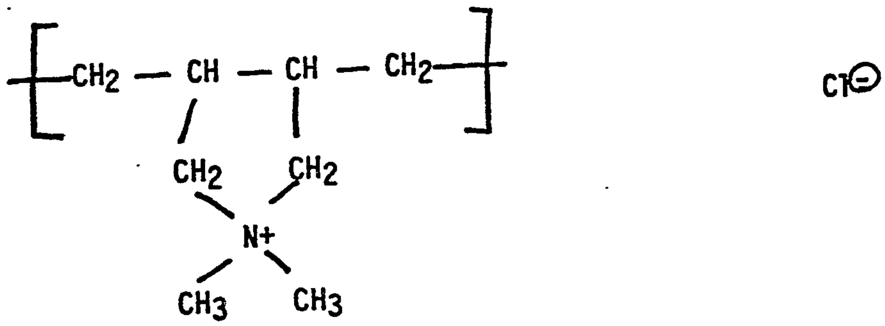

Mn ≈ 250 - 400 x $10^3$

A Group III Polymer

PAC = Dispersion of powdered activated carbon in slurry with sodium carboxymethyl cellulose being used as a suspending agent.

The test results indicate that THM precursors are removed by treatment with a P.A.C. dispersion plus a blend of polymers A and B (Group I and III polymers specifically). The combination of PAC and polymers A and B shows enhanced treatment capabilities.

With respect to P.A.C. it has been mentioned above that there is a need for a P.A.C. containing slurry product.

It has been found that P.A.C. can be effectively slurried with water soluble polysaccharide materials such as dextran polymers, and cellulose ethers including hydroxyalkyl ($C_1$ to $C_4$) cellulose and carboxyloweralkyl ($C_1$ to $C_4$) ethers.

According to a further embodiment of the present invention there is provided a composition comprising a slurry of powdered activated carbon and an effective amount of an effective suspending agent.

The slurries are formulated so as to have initial viscosities within the range of about 2,500 to 4,000 mPa sec (cps) Brookfield RVT. The slurries of the embodiment of the present invention are capable of

withstanding long storage periods (i.e. 6 months at ambient temperatures) without undergoing significant phase separation or gellation and they exhibit thixotropy in that after such lengthy storage periods, application of shear forces reduces the viscosity to the initially prepared range, thus providing for easy pumpability of product even after storage.

Slurry formulations in accordance with this embodiment of the present invention allow for the provision of high powdered activated carbon content in the slurry. Typical slurry formulations of the invention are within the following ranges:

| | |
|---|---|
| Based upon total slurry weight | |
| polysaccharide | 0.025 - 5 wt % |
| P.A.C. | 1 - 50 wt.%. |
| Remainder water | |

The cellulose ether materials may be further defined as being carboxyloweralkyl ($C_1$ to $C_4$) cellulose materials or water soluble salt forms thereof. These materials are water soluble and are commercially available from Hercules, Inc., Wilmington, Delaware. Presently, sodium carboxymethyl cellulose is preferred for use. Hydroxyethyl cellulose also demonstrates superior efficacy.

At present the slurry preferred for use is:

| | |
|---|---|
| 0.5% - | sodium carboxymethyl cellulose, having a viscosity of about 400 to 800 mPa sec (cps) at 2% concentration (commercially available from Hercules, Inc.) |
| 30% - | P.A.C. |
| Remainder water | |

Dextran polysaccharide polymers and hydroxyalkyl ($C_1$ to $C_4$) cellulose materials may also be mentioned as showing some, albeit minimal, efficacy although use of the above noted cellulose ether materials is clearly preferable.

Quite surprisingly, when well known suspending agents such as polyoxyalkylglycol, polyvinylalcohol and certain polyethylene glycol esters were slurried with P.A.C., unacceptable gellation or phase separation occurred within hours.

The following further Examples illustrate but in no manner limit the present invention in respect of the P.A.C./suspending agent slurries.

Examples

The following two procedures were undertaken to ascertain whether candidate suspending agent materials were suitable to form stable, thixotropic powdered activated carbon containing slurries.

1. Blend Viscosity - a thixotropic blend nature is necessary to help maintain blend stability (Stoke's Law). Viscosity building (or rebuilding) must be slow (minimum of several hours) to ensure easy handling and manufacturing. Final standing appearance should be fluid (not gelled) and viscosity reduction (recovery) must occur with shear.

2. Stability - all samples are subjected to static 40°F, ambient, and 50°C (122°F) stability testing. Blend gellation, hard pack sludging or significant liquid separation following six week ambient and 4.5°C (40°F) and one week storage at 50°C (122°F) will necessitate candidate suspending agent rejection. Dispersion viscosity recovery upon the application of moderate shear is required following three week 50°C (122°F) storage.

Based upon the above test procedures, the following polysaccharide suspending agents were deemed to pass:

1. dextran polymer - only minimal efficacy, some trouble in attaining the desired P.A.C. level in the resulting slurry.

2. sodium carboxymethyl cellulose, Hercules, Inc., 9M8F, viscosity at 2% concentration, 400 to 800 mPa sec (cps) at 25°C - presently preferred for use.

3. hydroxyethyl cellulose, Hercules, Inc., Natrosol - only minimal efficacy, due to some sludging with storage.

The following well-known dispersants failed the above tests and hence are deemed not suitable:

1. Westvaco POE-40, polyoxyethylene sorbitol-hexaoleate.
2. Westvaco PEG-600 DOTS, polyethylene-glycoldioleate.
3. Westvaco PEG-400 MOT, polyethyleneglycol-monoleate.
4. Polyvinylalcohol, high viscosity "Elvanol HV".
5. Polyvinylalcohol, low molecular weight "09050 Elvanol".
6. "U-Con 5100", polyalkylene glycol.

Slurries of P.A.C. with effective polysaccharide suspending agents have proven useful in influent water clarification methods.

..........................................................

CLAIMS

1. A method for reducing the content of trihalomethane compounds or precursors thereof in influent water, which comprises adding to the water

a) powdered activated carbon,

b) a water soluble or water dispersible cationic polymer.

2. A method of treating influent water to reduce the content of trihalomethane compounds or precursors thereof, wherein the water is caused to travel from an upstream direction to a downstream direction and is subjected to softening, clarification or filtration processes, which comprises adding to the water, at a location or locations upstream from the softening, clarification or filtration processes,

a) powdered activated carbon,

b) a water dispersible cationic polymer.

3. A method according to claim 1 or 2, wherein there is added to the water about 1 to 5,000 ppm of the powdered activated carbon and about 0.1 to 2,500 ppm of the water soluble or water dispersible cationic polymer.

4. A method according to any of claims 1 to 3, wherein the water soluble or water dispersible cationic polymer comprises a polyquaternary ammonium polymer formed from reaction of a secondary amine with an epihalohydrin or epoxide.

5. A method according to claim 4, wherein the polymer is formed from reaction of dimethylamine and epichlorohydrin and has a molecular weight $\bar{M}n$ of around 10,000.

6. A method according to claim 4, wherein the water soluble or water dispersible cationic polymer comprises a cross-linked polyquaternary ammonium polymer formed from reaction of a secondary amine, epihalohydrin or epoxide, and a third reactant

selected from ammonia, primary amines, alkylenediamines and polyamines.

7. A method according to claim 6, wherein the water soluble or water dispersible cationic polymer comprises a cross-linked polyquaternary ammonium polymer formed from ethylenediamine, dimethylamine and epichlorohydrin and wherein the molecular weight (Mn) of said cross-linked polyquaternary ammonium polymer is about 400 to 600 x $10^3$.

8. A method according to any of claims 1 to 3, wherein the water soluble or water dispersible cationic polymer comprises a linear homopolymer molecular chain of repeat units having one of the formulae

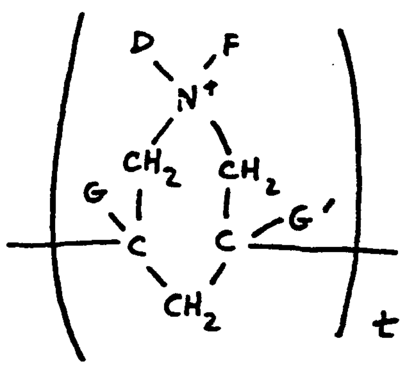
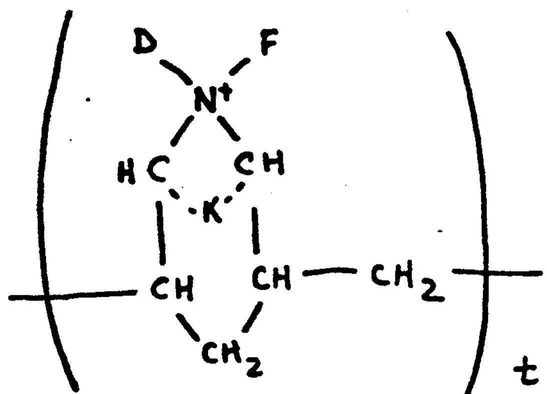
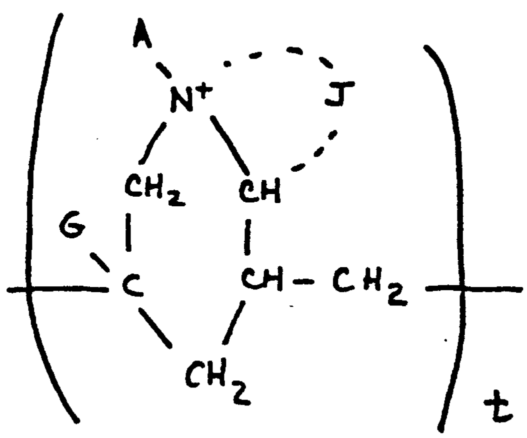
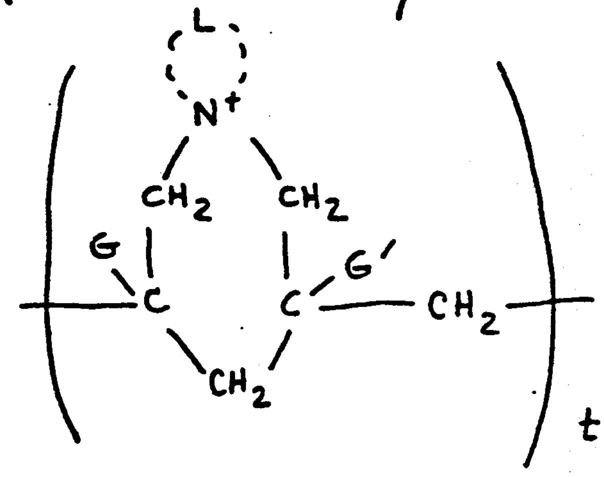

wherein with each cationic ammonium group there is associated a chloride anion;

wherein the symbols D and F independently represent an alkyl, hydroxyalkyl, or phenyl radical which may contain as substituents such groupings as amido, carboloweralkoxy, loweralkoxy, mono and dicyclic aryloxy, cyano, thioloweralkoxy, thiophenoxy, or lower alkoyl (forming a ketonic group) radicals, 5- and 6-membered cycloalkyl groupings, and, on the alkyl groupings only, a nitro group, and on the phenyl radical only, a halogen atom (chlorine, bromine, fluorine, and iodine);

wherein the symbols G and G' independently represent a hydrogen, chloro, bromo, or lower alkyl or phenyl radical, having substituents as stated under the definition for D and F above;

the symbol K stands for a divalent radical of the formula

$$CH_2-(O)_s-CH_{2u}- \quad ;$$

the symbol J stands for a divalent radical of the formula

$$-(CH_2)_w-(O)_s-CH_2- \quad ;$$

the symbol L stands for a divalent radical of the formula

$$-(CH_2)_w-(O)_s-(CH_2)_z \quad ; \text{ and}$$

wherein, the small letter s represents one of the numbers 0 and 1;

the small letter u represents one of the numbers 1 and 2; and

the small letter w represents one of the numbers 2 and 3.

9. A method according to claim 8, wherein the cationic polymer comprises polydiallyldimethyl ammonium chloride and wherein the molecular weight $\bar{M}n$ of the polymer is about 250 to 400 x 103.

10. A method according to any of claims 4 to 9, wherein the water soluble or water dispersible cationic polymer comprises both (i) a polyquaternary ammonium polymer formed via reaction of a secondary amine with epihalohydrin or epoxide and (ii) a polydiallyldimethyl ammonium chloride polymer.

11. A method according to any of claims 1 to 10, wherein the trihalomethane compounds comprise a member or members selected from chloroform, bromodichloromethane, dibromochloromethane, bromoform, iodoform, iododichloromethane, and diiodochloromethane.

12. A method according to any of claims 1 to 11, wherein the precursors comprise a member or members selected from ethanol, methyl ketone, humic acids, acetaldehyde, acetone, and aceptophenone.

13. A method according to any of claims 1 to 12, which also comprises adding the powdered activated carbon in the form of a slurry and suspending the carbon in the slurry with an effective amount of an effective suspending agent.

14. A method according to claim 13, wherein the suspending agent comprises an effective polysaccharide material.

15. A method according to claim 14, wherein the polysaccharide comprises a cellulose ether material.

16. A method according to claim 15, wherein the cellulose ether comprises a member or members selected from hydroxyalkyl ($C_1$ to $C_4$) cellulose ethers and carboxyalkyl ($C_1$ to $C_4$) cellulose ethers.

17. A method according to claim 16 wherein the hydroxyalkyl cellulose ether comprises hydroxyethyl cellulose.

18. A method according to claim 16, wherein the carboxyalkyl cellulose ether comprises carboxymethyl cellulose.

19. A method according to claim 16, wherein the slurry comprises from about 1 to 50 wt. % powdered activated carbon, about 0.025 to about 5.00 wt.% cellulose ether, remainder water, and wherein the slurry has a viscosity of about 2,500 to 4,000 mPa sec (cps) Brookfield RVT.

20. A method according to claim 19, wherein the cellulose ether comprises hydroxyethyl cellulose and wherein the slurry comprises about 0.5 wt.% hydroxyethyl cellulose, about 30 wt.% powdered activated carbon, remainder water.

21. A composition comprising a slurry of powdered activated carbon and an effective amount of an effective suspending agent.

22. A composiiton according to claim 21, wherein, based on the total weight of the slurry, the powdered activated carbon is present in an amount of from about 1% to about 50 wt.%, and the suspending agent being present in an amount of about 0.025% to about 5 wt.%.

23. A composition according to claim 21 or 22, wherein the suspending agent comprises a polysaccharide material.

24. A composition according to claim 23, wherein the polysaccharide material comprises a cellulose ether.

25. A composition according to claim 24 wherein the cellulose ether comprises a member or members selected from hydroxyloweralkyl ($C_1$ to $C_4$) cellulose and carboxyloweralkyl ($C_1$ to $C_4$) cellulose and water soluble salt forms thereof.

26. A composition according to claim 25, wherein the hydroxyloweralkyl ($C_1$ to $C_4$ cellulose comprises hydroxyethyl cellulose.

27. A composition according to claim 25, wherein the carboxyloweralkyl cellulose comprises sodium carboxymethyl cellulose.

28. A composition according to claim 27, wherein the powdered activated carbon is present in an amount of about 30 wt.%, and wherein the sodium carboxymethylcellulose is present in an amount of about 0.5 wt.%.

29. A composition according to any of claims 21 to 28, wherein the slurry has a viscosity of about 2,500 to 4,000 cps Brookfield RVT.

.......................................................